# EUROPEAN PATENT SPECIFICATION

(11) **EP 2 978 662 B1**
(45) Date of publication and mention of the grant of the patent: **13.11.2019**
(21) Application number: 14715075.9
(22) Date of filing: 26.03.2014
(51) Int. Cl.: B64C 9/32, B64C 3/58, B64C 9/08

(54) **LIFT-REDUCING APPARATUS FOR AIRCRAFT WINGS**
VORRICHTUNG ZUR AUFTRIEBVERMINDERUNG VON FLUGZEUGTRAGFLÄCHEN
DISPOSITIF DE RÉDUCTION DE PORTANCE DES AILES D'AVION

(30) Priority: 26.03.2013 GB 201305461
(43) Date of publication of application: 03.02.2016
(73) Proprietor: Airbus Operations Limited, Bristol BS34 7PA (GB)
(72) Inventor: ROLSTON, Stephen, Bristol BS9 3JT (GB)
(74) Representative: Worthington, Richard Easton
(86) International application number: PCT/GB2014/050958
(87) International publication number: WO 2014/155107

(56) References cited:
- US-A- 2 557 829
- US-A- 2 987 277
- US-A- 5 566 910
- US-A1- 2005 011 994
- US-A1- 2007 284 483
- US-A1- 2013 020 432

## Description

The invention relates to aircraft wings, and particularly such wings for transport aeroplanes, where it is desirable to reduce or limit the maximum load on the wing due to lift at the extremes of the flight envelope. This function is often known as the Load Alleviation Function or LAF. Such loads can arise from manoeuvres, continuous turbulence or discrete gusts.

For the outer parts of the wing the ailerons can be used to reduce lift, and normally spoilers are also present on the upper surface, which can be deployed as needed. This reduction in lift in the outboard and midboard wing will result in a more favourable distribution of load along the wing span giving a reduction in bending moment at the wing root.

An example of spoilers used for locally modifying lift is given in US 2009/266938 (Airbus). Another Airbus application, WO 2006/108579, uses a sliding spoiler or cover to bridge the gap formed when a flap is deployed during start and landing, in order to reduce air resistance and noise. A hinged shaped spoiler for use in lateral control, instead of an aileron, can be installed in the upper surface of a wing as shown in GB 1018097 (Shin-Mitsubishi Jukogyo KK). A control system acting on outboard flaps to reduce wing root bending moment (Maneuver load alleviation or MLA) is disclosed in US 4796192 (Lewis/Boeing). EP 239138 also by Boeing describes aileron-mounted trailing-edge flaps used as air brakes or for additional lift. US2007/284483 A1 shows a mobile airfoil device that can locally modify the lift of an aircraft wing. A method of providing a controllable side force to an air vehicle using a spoiler arrangement is disclosed in US2013/0020432 A1.

The invention has particular applicability to the wings of transport aircraft designed to operate in cruise at transonic speeds, i.e. near the speed of sound, generally in the range Mach 0.70 - 0.85.

The invention is defined as a method of controlling an aircraft according to claim 1.

Constructions using the invention fit a spoiler or similar device in the lower surface of the wing to reduce the lift component from the rear part of the wing, aft of maximum thickness. In modern aircraft this rear part, or a substantial part of it, is usually concave, in order to add a lift component from the rear section. This is known as an "aft-loaded" wing section. Since it is not generally possible to induce flow separation in the forward part of the wing, the invention concentrates on fitting the device in the rear part. Normally it would be located between the maximum thickness of the aerofoil and the beginning of the concave part, possibly slightly overlapping the beginning of the concave part.

The spoiler device would fit best in particular in the mid to outer part of the wing span, generally underneath where the upper surface spoilers would be. The further out the spoiler device, the greater the effect on the moment at the wing root. For much of the length (span) of the wing,
the trailing edge would itself be constituted by a flap having a concave lower surface.

The device can be a spoiler flap, hinged at its rear or forward edge or nearer the centre, or a deformable skin section, or even a porous or slotted section of the wing surface, through which air can be forced to cause flow separation. The lower spoiler can be used in conjunction with a spoiler or spoilers on the upper surface.

For a better understanding of the invention, embodiments of it will now be described, by way of example, with reference to the accompanying drawings, in which:
- Figure 1: shows the pressure distribution over an aftloaded wing section;
- Figure 2: shows the shape of the wing section;
- Figure 3: shows an embodiment of the invention, in section and from below;
- Figure 4: shows the effect of deploying the spoiler on the lower surface;
- Figure 5: shows a variation of the first embodiment;
- Figure 6: shows a second embodiment, with upper and lower spoilers;
- Figure 7: shows a third embodiment;
- Figure 8: shows a fourth embodiment; and
- Figure 9: shows an aircraft wing from above, illustrating the preferred location of the spoiler device.

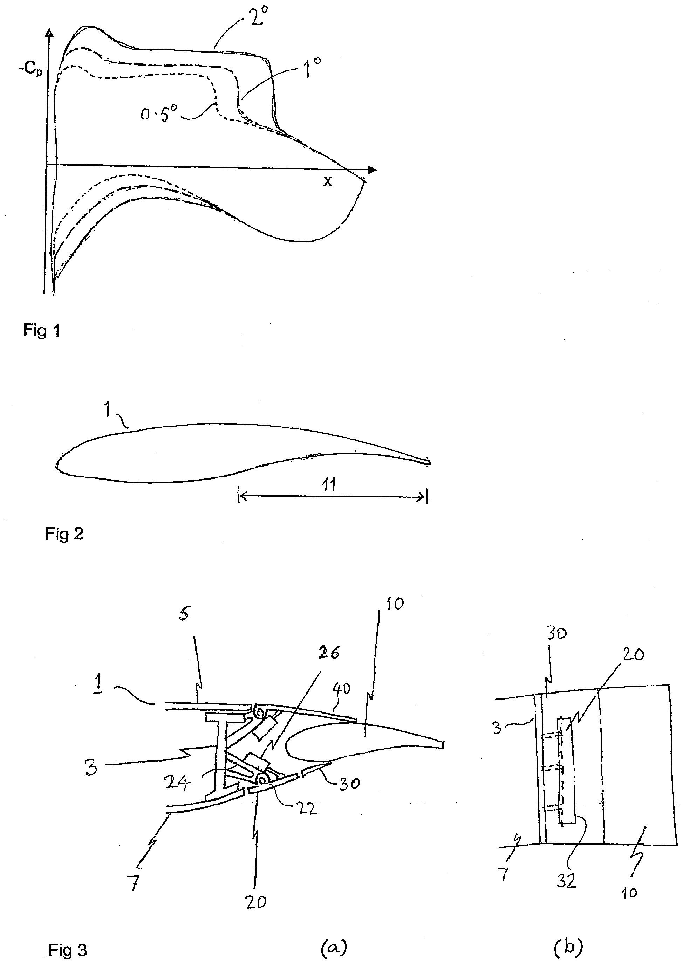

First, the distribution of pressure along the chord of a wing section will be explained with reference to **Figure 1****.** In fact, the graph shows a dimensionless pressure coefficient Cₚ, but it will be referred to as "pressure" for brevity. Pressure decreases as one moves up the y axis. The section itself is shown in **Figure 2****.** The leading edge is at zero on the x-axis. The upper half of the y-axis shows the (under-)pressure above the wing, the lower half the excess pressure below the wing. As can be seen, the airfoil shape is a supercritical or aft-loaded shape typical of modern transonic wing designs, concave over the rear part 11 of its lower surface. The pressure underneath the wing 1 decreases from an initial peak, and then gradually increases again typically just aft of the maximum thickness and finally decreases fairly sharply towards the trailing edge. Above the wing there is a small suction peak at the leading edge, a long plateau and then a sudden increase in pressure at a shock wave where the airspeed turns from supersonic to subsonic and then a more gradual recompression to the trailing edge (assuming the flow is not separated).

Figure 1 shows three different curves, the dotted line representing an angle of incidence of 0.5°, the dashed line 1° and the solid line 2°. The curves are generally the same shape, pressure values increasing with angle of incidence, but it will be observed that the pressure under the rear section of the wing starting a short distance aft of the wing maximum section thickness, say somewhat less than half its extent, is essentially independent of the angle of incidence.

The resultant lift is given by the area of the curved shape. There is a significant lift component arising from the rear wing section, and the present invention aims to adjust this contribution by the use of a spoiler (or device to give a similar effect to a spoiler) in the rear lower section of wing.

**Figure 3** illustrates a first embodiment of the invention, showing (in Figure 3a) a partial section through a wing rear section and, in Figure 3b, a view on part of the wing 1 from below. The general wing shape is given by top and bottom covers 5, 7, supported by a framework represented in the diagram by the rear spar 3. The trailing edge of the wing at this point is constituted by a flap 10 supported by levers, not shown. In the wing box or shroud 30 making the transition from the main wing covers to the flap there is a slot 32 in the lower surface. The slot is occupied by a spoiler 20 mounted on a longitudinal axis or hinge line 22, itself supported on brackets 24 attached to the rear spar 3 of the wing. The hinge line can be parallel to the rear spar or a few degrees off parallel if the wing is tapered. An actuator 26, which could be hydraulic or electric, for instance, acts on the spoiler to the rear of the hinge 22 to deploy the spoiler outwardly into the airstream.

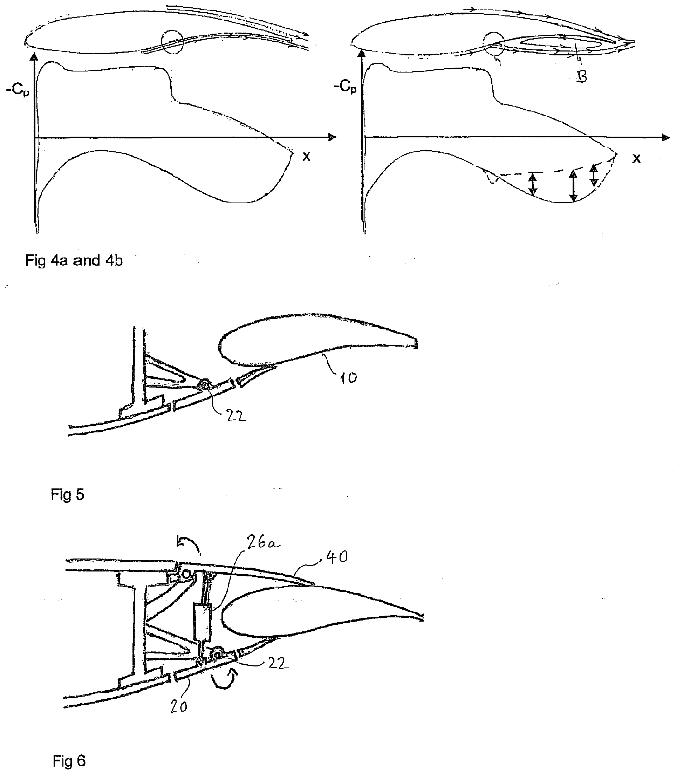

When the spoiler is deployed it has the effect of causing flow separation in the rear part of the wing, forming a "bubble" B of air circulation. This is illustrated in **Figure 4.** Figure 4a shows the uninterrupted flow, as would obtain for typical 1g cruise conditions, Figure 4b the flow with the spoiler deployed.

It can be seen from the latter Figure that a considerable amount of lift is destroyed by the deployment of the spoiler. Such deployment can be carried out when the aircraft experiences a gust, encounters turbulence or has to execute a manoeuvre during cruise, in order to avoid excess loads on the wing, and in particular on the mid- to outer parts of the wing. After the need has passed, the spoiler can be stowed again. This can be carried out automatically by the on-board control system.

Instead of being hinged near the upstream edge as in Figure 3, the spoiler can be hinged near the mid-chord **(****Figure 5****)** or even near the downstream edge **(****Figure 6****)**. The former configuration balances the aerodynamic load forward and aft of the hinge line, which lowers the actuation force required. At least in the embodiment of Figure 6, the majority, preferably at least three-quarters, of the surface of the spoiler is deployed outwardly of the remaining wing surface.

There will usually already be a spoiler on the upper surface of the wing. This is shown at 40 in Figure 3a. There will be at least some overlap in the wing span direction, making it possible to use a common actuation mechanism for the two spoilers, as in the Figure 6 embodiment. This leads to a reduction in weight. In this variant the lower surface spoiler has a hinge line near the trailing edge, the actuator 26a acting roughly in the middle, and the upper spoiler has a hinge line at the leading edge, the actuator acting a little way downstream. The actuation loads for deployment and stowage can then roughly balance. That is, when the spoilers are stowed, the force acting to close the lower spoiler roughly balances the force (under-pressure) acting to open the upper spoiler, and contrariwise when the spoilers are deployed.

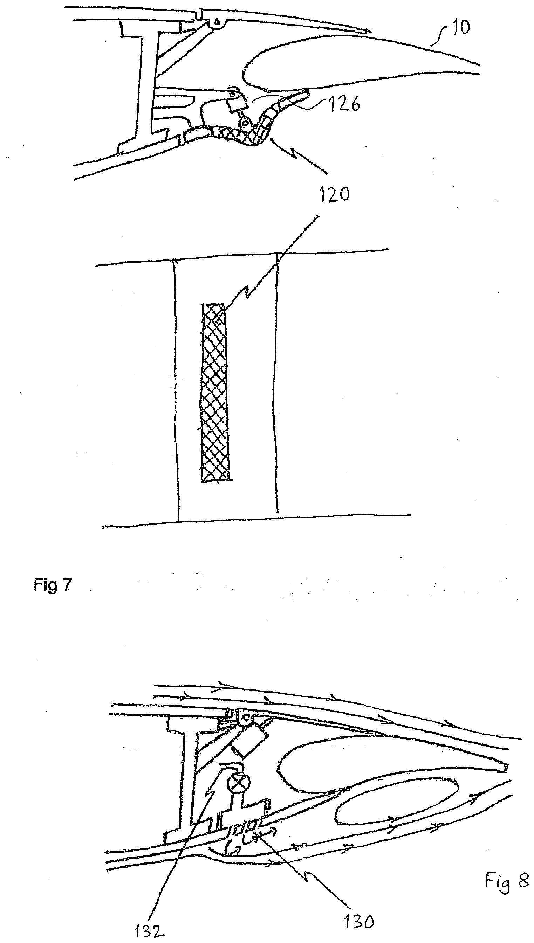

**Figure 7** shows a further embodiment, in which the spoiler is not a hinged flap but an area or sheet of flexible or morphing material 120, acted on from inside the wing by an actuator 126. This sheet of material is stiff enough to hold its shape during 1g cruise when the actuator is in its stowed condition, but can be caused to bulge into the air flow by an actuator.

Again, the bump should be big enough to cause flow separation lasting at least to the trailing edge of the wing. An advantage of this system is that no gap is needed between the spoiler and the lower surface shroud or fairing, which reduces drag and the need for gap sealing.

In a further alternative, shown in **Figure 8**, the relevant section of the lower wing surface can be porous or have small holes 130, through which air is fed 132 from a high-pressure source such as an engine bleed or onboard pump. The air can be injected into the airstream at an acute angle (i.e. partly into the oncoming air), in the range 0° to 45° to the surface normal.

In general the invention makes possible a reduction in wing loads and therefore structural weight, as the lower surface spoiler when deployed reduces that component of the lift force that would normally be generated by the rearward portion of the wing lower surface. The lift component in this region cannot be influenced by the upper surface spoiler acting on its own. Therefore when used in combination with an upper surface spoiler an increase in the wing LAF is possible compared to a wing with only an arrangement of upper surface spoilers. Alternatively the use in combination with an upper spoiler allows, for the same LAF, a smaller upper surface spoiler and concomitant reduction in weight of its actuator, especially if the same actuator is used for both spoilers.

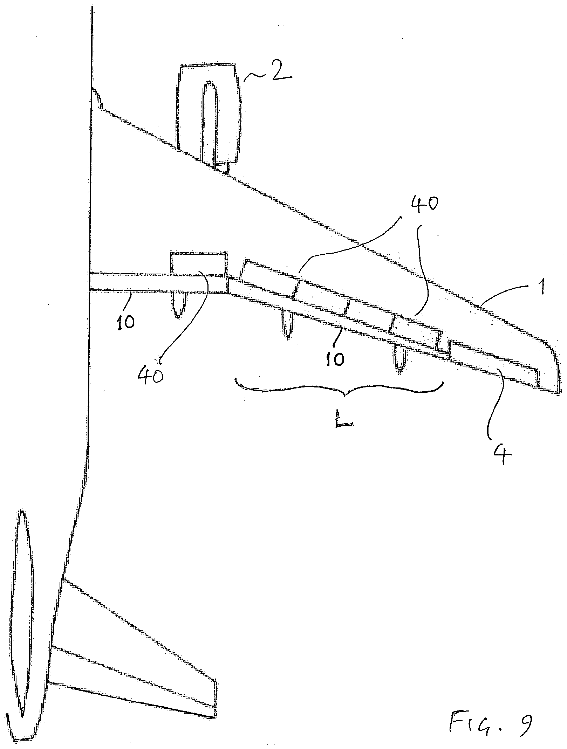

As indicated by the letter L in **Figure 9**, which schematically shows a wing 1 with aileron 4 and engine 2, the lower-side spoiler device, which may consist of a number of spoilers, is best placed in the midsection of the wing 1. This region L runs from the inboard edge of the aileron to the inboard edge of the bank of four upper spoilers 40 near the angled rear wing edge. The upper spoilers 40, or at least those in the corresponding area, can then be actuated at the same time as the lower.

Figure 9 also shows inboard and mid-board flaps 10 at the trailing edge of the wing, partly covered (during cruise) by the upper spoilers 40 or the wing itself, and extending all the way out to the aileron 4. The majority at least of the concave rear lower surface of the wing will be presented by the flaps. Although the embodiments shown illustrate a spoiler device associated with a flap at the trailing edge of the wing, such a device could alternatively or additionally be located at a part of the wing where the trailing edge has a fixed section.

## Claims

1. A method of controlling an aircraft having wings (1), the rear part (11) each wing (1) having a lower surface which is concave over at least some of its length, the method comprising, during cruise, reducing the lift on the wings by actuating a spoiler device (20; 120; 130) from a configuration in which the surface is uninterrupted to one in which the spoiler device separates flow, thereby reducing lift at the concave part, wherein the spoiler device is located on the lower surface forward of at least part of the concave part and aft of the thickest part of the wing and the spoiler device (20; 120; 130) is located in the midsection (L) of the wing span inboard of an inboard edge of an aileron (4) of the wing.

2. A method according to claim 1, in which a control surface on the upper side of each wing is actuated simultaneously with that on the underside.

3. A method according to claim 1 or 2, wherein the spoiler device includes a deployable spoiler (20), and wherein the method comprises deploying the deployable spoiler (20) to reduce lift.

4. A method according to claim 3, wherein the spoiler device further includes an actuator (26), and wherein the method comprises operating the actuator to deploy the spoiler.

5. A method according to claim 4, further comprising operating the actuator to deploy the spoiler (20) outwardly into the airflow.

6. A method according to any preceding claim, further comprising a further spoiler (40) on the upper surface of each wing.

7. A method according to claim 6, further comprising operating the two spoilers by the same actuator (126).

8. A method according to claim 1, wherein the spoiler device includes a flexible or deforming material (120), and wherein the method comprises operating the flexible or deforming material so as to protrude from the wing surface.

9. A method according to claim 1, wherein the spoiler device includes a permeable area (130) of the lower surface, and wherein the method comprises expelling air from the permeable area to cause flow separation.

10. A method according to any preceding claim, wherein the spoiler device is located at the forward edge region of the concave part.

11. A method according to any preceding claim, wherein the aft part of the wing is constituted at least partly by one or more flaps (10), the lower surface of which is concave.

12. A method according to any preceding claim, wherein the wing has a supercritical airfoil shape.

13. A method according to any preceding claim, wherein actuating the spoiler device during cruise is at transonic speeds.

## Patentansprüche

1. Verfahren zum Steuern eines Flugzeugs, das Flügel (1) aufweist, wobei der hintere Teil (11) eines jeden Flügels (1) eine untere Oberfläche aufweist, die wenigstens über einen Teil seiner Länge konkav ist, wobei das Verfahren während des Flugs das Verringern des Auftriebs an den Flügeln durch Betätigen einer Spoiler-Vorrichtung (20; 120; 130) von einer Konfiguration, bei der die Oberfläche ununterbrochen ist, zu einem, bei dem die Spoiler-Vorrichtung die Strömung teilt, wodurch sich der Auftrieb am konkaven Teil verringert wird, wobei die Spoiler-Vorrichtung an der unteren Oberfläche vor wenigstens einem Teil des konkaven Teils und hinter dem dicksten Teil des Flügels angeordnet ist, wobei die Spoiler-Vorrichtung (20; 120; 130) im Mittelabschnitt (L) der Flügelspanne bordseitig von einer Bordseitenkante eines Querruders (4) des Flügels angeordnet ist.

2. Verfahren nach Anspruch 1, bei dem eine Steuerfläche an der Oberseite eines jeden Flügels gleichzeitig mit der an der Unterseite betätigt wird.

3. Verfahren nach Anspruch 1 oder 2, wobei die Spoiler-Vorrichtung einen ausfahrbaren Spoiler (20) einschließt und wobei das Verfahren das Ausfahren des ausfahrbaren Spoilers (20) zum Verringern des Auftriebs umfasst.

4. Verfahren nach Anspruch 3, wobei die Spoiler-Vorrichtung ferner ein Stellglied (26) beinhaltet und wobei das Verfahren das Betreiben des Stellglieds zum Ausfahren des Spoilers umfasst.

5. Verfahren nach Anspruch 4, ferner umfassend das Betreiben des Stellglieds zum Ausfahren des Spoilers (20) nach außen in den Luftstrom.

6. Verfahren nach einem der vorherigen Ansprüche, ferner umfassend einen weiteren Spoiler (40) an einer oberen Oberfläche eines jeden Flügels.

7. Verfahren nach Anspruch 6, ferner umfassend das Betreiben der zwei Spoiler durch dasselbe Stellglied (126).

8. Verfahren nach Anspruch 1, wobei die Spoiler-Vorrichtung ein flexibles oder verformbares Material (120) enthält und wobei das Verfahren das Betreiben des flexiblen oder verformbaren Materials derart umfasst, dass es von der Flügeloberfläche vorsteht.

9. Verfahren nach Anspruch 1, wobei die Spoiler-Vorrichtung einen durchlässigen Bereich (130) der unteren Oberfläche enthält und wobei das Verfahren das Ausstoßen von Luft aus dem durchlässigen Bereich umfasst, um eine Ablösung zu bewirken.

10. Verfahren nach einem der vorherigen Ansprüche, wobei die Spoiler-Vorrichtung am Vorderkantenbereich des konkaven Teils angeordnet ist.

11. Verfahren nach einem der vorherigen Ansprüche, wobei der hintere Teil des Flügels wenigstens teilweise durch eine oder mehrere Klappen (10) aufgebaut ist, deren untere Oberfläche konkav ist.

12. Verfahren nach einem der vorherigen Ansprüche, wobei der Flügel eine überkritische Tragflächenform aufweist.

13. Verfahren nach einem der vorherigen Ansprüche, wobei die Betätigung der Spoiler-Vorrichtung während des Flugs bei transsonischen Geschwindigkeiten erfolgt.

## Revendications

1. Procédé de commande d'un aéronef comportant des ailes (11), la partie arrière de chaque aile (1) ayant une surface inférieure qui est concave sur au moins une partie de sa longueur, en croisière le procédé comprenant la réduction de la portance sur les ailes en actionnant un dispositif déflecteur (20, 120, 130) d'une configuration, dans laquelle la surface est ininterrompue vers une configuration, dans laquelle le dispositif déflecteur (20, 120, 130) sépare l'écoulement, réduisant ainsi la portance au niveau de la partie concave, le dispositif déflecteur étant situé sur la surface inférieure à l'avant d'au moins une partie de la partie concave et à l'arrière de la partie la plus épaisse de l'aile et le dispositif déflecteur (120, 120, 130) étant situé dans la section centrale de l'envergure interne d'un bord interne d'un aileron (4) de l'aile.

2. Procédé suivant la revendication 1, dans lequel une surface de commande sur le dessus de chaque aile est actionnée simultanément avec celle sur le dessous.

3. Procédé suivant la revendication 1 ou 2, dans lequel le dispositif déflecteur inclut un déflecteur déployable (20) et le procédé comprenant le déploiement du déflecteur déployable pour réduire la portance.

4. Procédé suivant la revendication 3, dans lequel le dispositif déflecteur inclut en plus un actionneur (26) et le procédé comprenant le fonctionnement de l'actionneur pour déployer le déflecteur.

5. Procédé suivant la revendication 4, le procédé comprenant en plus le fonctionnement de l'actionneur pour déployer le déflecteur (20) vers l'extérieur dans l'écoulement d'air.

6. Procédé suivant une des revendications précédentes, le procédé comprenant en plus un autre déflecteur (40) sur la surface supérieure de chaque aile.

7. Procédé suivant la revendication 6, le procédé comprenant en plus le fonctionnement des deux déflecteurs par le même actionneur (126).

8. Procédé suivant la revendication 1, dans lequel le dispositif déflecteur inclut un matériau souple ou déformable (120), et le procédé comprenant l'actionnement du matériau souple ou déformable de façon à faire saillie de la surface de l'aile.

9. Procédé suivant la revendication1, dans lequel le dispositif déflecteur inclut une zone perméable (130) de la surface inférieure, et le procédé comprenant l'expulsion de l'air de la zone perméable pour engendrer une séparation de l'écoulement.

10. Procédé suivant une des revendications précédentes, dans lequel le dispositif déflecteur est situé dans la zone de bord avant de la partie concave.

11. Procédé suivant une des revendications précédentes, dans lequel la partie arrière de l'aile est constituée au moins partiellement par un ou plusieurs ailerons (10), dont la surface inférieure est concave.

12. Procédé suivant une des revendications précédentes, dans lequel l'aile présente une forme aérodynamique supercritique.

13. Procédé suivant une des revendications précédentes, dans lequel l'actionnement du dispositif déflecteur en croisière a lieu à des vitesses transsoniques.
